# EUROPEAN PATENT APPLICATION

(11) **EP 1 674 189 A1**
(43) Date of publication of application: **28.06.2006**
(21) Application number: 04792181.2
(22) Date of filing: 08.10.2004
(51) Int. Cl.: B23K 26/073

(54) **ULTRASHORT PULSE LASER PROCESSING METHOD**

(30) Priority: 16.10.2003 JP 2003356533
(71) Applicant: Olympus Corporation, Tokyo 151-0072 (JP)
(72) Inventor: TSUNO, Natsuki c/o Olympus Corporation, Tokyo 192-8512 (JP); UCHIYAMA, Keiji c/o Olympus Corporation, Tokyo 192-8512 (JP)
(74) Representative: Kuhnen, Rainer-Andreas
(86) International application number: PCT/JP2004/014912
(87) International publication number: WO 2005/037482

(57) **Abstract**

There is disclosed a laser processing method for processing an article to be processed by using an ultrashort pulse laser, wherein a laser pulse is set to a fluence not more than a single-shot processing threshold fluence which is a fluence processing threshold value at the time of one pulse irradiation, and a plurality of shots of the thus set laser pulse are then applied to the article to be processed (6).

## Description

### Technical Field

The present invention relates to an ultrashort pulse laser processing method of finely processing an article to be processed by using an ultrashort pulse laser.

### Background Art

A method of efficiently generating laser induced destruction by a pulse width and a fluence in an area which exhibits a unique relationship between a threshold fluence and a pulse width in one pulse is described in Japanese Patent No. 3283265 "METHOD OF CONTROLLING LASER INDUCED DESTRUCTION AND CUT SHAPE".

Pulse laser processing by a laser beam of a relatively long pulse width complies with a so-called scaling rule in which a relationship between a pulse width value τ and a threshold fluence Fₜₕ generated by processing is represented by τ = α·Fₜₕ^{1/2}. Here, the relationship indicates an amount of energy per unit area represented by fluence = pulse width x light intensity/spot area.

In the case of this conventional method of laser induced destruction, laser induced destruction is generated by using a pulse laser of an ultrashort pulse width value incompatible with the scaling rule, and processing such as breaking, cutting, or abrasion of an article to be processed is carried out. According to this method, a reduction in pulse width is accompanied by an increase in threshold fluence at the timed of one pulse irradiation from a boundary of a predetermined pulse width (referred to as single-shot processing threshold fluence, hereinafter), whereby energy of a high density and high strength can be applied to the article to be processed. In other words, the application of the energy of high strength causes potential strain such as tunneling. Even in a multiphoton absorption process, the laser induced destruction is localized by relatively small photon absorption. Accordingly, processing finer than a spot size and Rayleigh range is enabled even in an absorbed wavelength.

### Disclosure of Invention

However, in the case of the laser processing method of Japanese Patent No. 3283265, the reduction in pulse width is accompanied by the increase in single-shot processing threshold fluence. In consequence, energy of high strength is necessary for a material of a high processing threshold fluence. In this case, an ultrashort pulse laser of a high output that uses a reproduction amplifier is necessary. Further, according to this method, the energy of high strength is applied to the article to be processed at one shot. Thus, particularly in a resin material or a biomaterial on which a thermal influence is large to cause easy laser destruction, melting or cracks easily occur due to heat unless a processing fluence is strictly controlled in an area near the threshold fluence. A unique relationship between pulse width and threshold fluence which varies from material to material is used. Thus, the processing must be stabilized by highly accurately controlling the pulse width and the fluence. However, in an ultrashort pulse area in which an area of a pulse width is several ps or less, an optical system causes a reduction or a variance in energy, and dispersion causes a fluctuation in pulse width, for both of which beam control is difficult. In particular, a fine adjustment is difficult in an ND filter or an attenuator which controls energy, resulting in poor reproducibility and stability. Best characteristics are provided near the processing threshold fluence to enable highly accurate processing. In reality, however, it is difficult to control energy and pulse width. Thus, processing must be carried out by a sufficiently large fluence from the processing threshold fluence.

The present invention has been developed to solve the aforementioned problems, and it is an object of the invention to provide an ultrashort pulse laser processing method of low energy and high stability.

To achieve the object, according to an aspect of the present invention, a laser processing method for processing an article to be processed by using an ultrashort pulse laser sets a laser pulse to a fluence not more than a single-shot processing threshold fluence which is a processing threshold value of a fluence at the time of one pulse irradiation, and applies a plurality of shots of the laser pulse to the article to be processed.

Furthermore, the present invention is directed to an ultrashort pulse laser processing device for realizing the ultrashort pulse laser processing method.

### Brief Description of Drawings

FIG. 1 is a diagram showing an entire configuration of an ultrashort pulse laser processing device according to a first embodiment of the present invention;
FIG. 2 is a microscopic picture showing abrasion of a surface of an article to be processed in accordance with the fluence and the number of shots of the first embodiment;
FIG. 3 is a coordinate graph showing the relationship between pulse width and the threshold number of shots according to a second embodiment;
FIG. 4 is a coordinate graph showing theoretical and experimental values of single-shot and multishot threshold fluences according to the second embodiment;
FIG. 5 is a microscopic picture showing internal modification of a surface of an article to be processed in accordance with the fluence and the number of shots of a third embodiment;
FIG. 6 is a coordinate graph showing the relationship between repetitive frequency and the threshold number of the shots according to a fourth embodiment; and
FIG. 7 is a coordinate graph showing the relationship between multishot processing threshold fluence and the threshold number of the shots when a glass is subjected to abrasion according to the fourth embodiment.

### Best Mode for Carrying Out the Invention

Hereinafter, the embodiments of the present invention will be described with reference to the accompanying drawings.

### (First Embodiment)

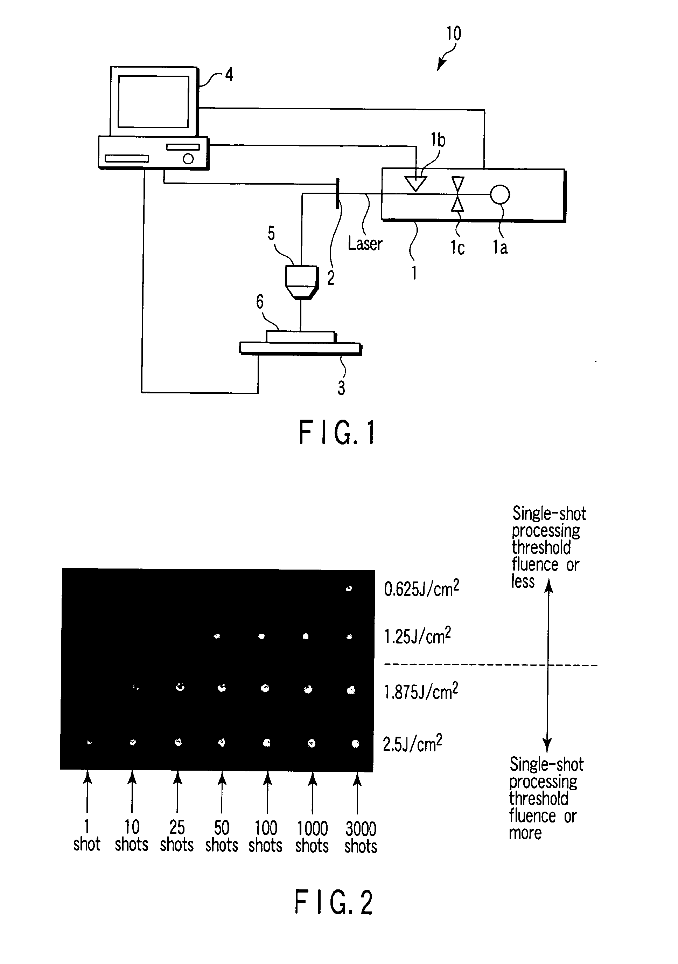

FIG. 1 is a diagram showing an entire configuration of an ultrashort pulse laser processing device 10 for realizing an ultrashort pulse laser processing method of the present invention. The ultrashort pulse laser processing device 10 comprises an ultrashort pulse laser generator 1, a shutter 2, a stage 3, a computer 4 and a converging optical system 5. An article 6 which is a processing target is mounted on the stage 3 and processed.

A laser beam generated from the ultrashort pulse laser generator 1 enters the converging optical system 5 through the shutter 2. The converging optical system 5 forms the laser beam into a desired beam shape, and converges the laser beam on a surface of the article to be processed 6 or on a predetermined position therein. As the converging optical system 5, for example, a single aspherical lens is used. For example, the article to be processed 6 is a metal, a wafer, a glass, a crystal material, a biomaterial, or a resin. According to the embodiment, a borosilicate glass (BK 7, hereinafter) is used for the article to be processed 6.

The computer 4 functions as a controller for controlling driving of the ultrashort pulse laser generator 1, the shutter 2 and the stage 3. In other words, the computer 4 outputs a driving signal to the ultrashort pulse laser generator 1, the shutter 2 and the stage 3. The ultrashort pulse laser generator 1 generates a laser beam based on a fluence and a pulse width instructed by the driving signal from the computer 4, and applies the laser beam to a component other than the device. Specifically, for example, based on the driving signal from the computer 4, driving of a component such as a diffraction grating, a prism or a light-shielding filter in the ultrashort pulse laser generator 1 is controlled.

The ultrashort pulse laser generator 1 comprises a laser irradiation source 1a, a laser beam sensor 1b and a laser controller 1c. A laser beam from the laser irradiation source 1a is controlled to be a laser beam having desired characteristics by the laser controller 1c. Upon detection of laser beam irradiation from the laser irradiation source 1a, the laser beam sensor 1b outputs a detection signal to the computer 4. The computer 4 controls the shutter 2 in synchronization with timing of the detection signal, and can adjust a frequency of the applied laser beam or decide the number of shots. The shutter 2 can set a frequency lower than a frequency of a laser pulse from the ultrashort pulse laser generator 1 by cutting off the laser pulse from the ultrashort pulse laser generator 1 at a predetermined frequency, or the like. Additionally, the computer 4 controls driving of the stage 3, and moves relative positions of the pulse laser beam and the article to be processed 6 in accordance with the laser irradiation timing. A driving signal for driving the converging optical system 5 may be output from the computer 4, and the laser beam irradiation position of the article to be processed 6 may be relatively moved by driving the converging optical system 5, or the converging optical system 5 and the stage 3 may both be moved to realize this relative position movement.

According to the embodiment, the ultrashort pulse laser generator 1 uses a light source which can change a repetitive frequency of a pulse to 5 kHz, a laser wavelength to 800 nm, and a pulse width to 150 fs to 3 ps. The shutter 2 is realized by Pockels cell. By controlling this Pockels cell in synchronization with an output of the laser beam detected by the laser beam sensor 1b, it is possible to control the number of shots of the laser beam.

Next, an operation of the ultrashort pulse laser processing device 10 will be described.

First, basic parameters of a laser beam to be applied are set by using the computer 4. For the setting of the basic parameters, for example, the basic parameters may be input by using an input device disposed in the computer 4. The basic parameters to be input are, e.g., a fluence, a pulse width, the number of shots and the like. These basic parameters may be automatically calculated by an application program installed in the computer 4.

According to the embodiment, among the basic parameters, a pulse width is set to 500 fs, fluences are set equal to/less than a single-shot processing threshold fluence, i.e., 0.625, 1.25 J/cm², and fluences are set equal to or more than a single-shot processing threshold fluence based on a conventional art, i.e., 1.875, 2.5 J/cm² to compare with a laser processing technology of the invention. For the fluences, the numbers of shots are set to 10, 25, 50, 100, 1000, and 3000. For reference, an operation is similarly performed in the case of one shot. Here, the single-shot processing threshold fluence is a fluence value generated during processing of the article 6 to be processed with respect to a laser pulse width when a single laser pulse is applied to the article to be processed 6.

The computer 4 outputs a driving signal to the ultrashort pulse laser generator 1 based on the obtained basic parameters.

Upon reception of the driving signal from the computer 4, the ultrashort pulse laser generator 1 generates and outputs a laser beam of a fluence and a pulse width designated by the driving signal. When a sensor of the ultrashort pulse laser generator 1 detects the output of the laser beam, a detection signal is output to the computer 4. The computer 4 controls the shutter 2 in synchronization with the detection signal, and adjusts the number of shots to a designated number. More specifically, for example, a modulation voltage applied to the Pockels cell constituting the shutter 2 only needs to be controlled by the driving signal. Accordingly, desired laser irradiation is carried out. When the laser irradiation at a given point reaches the designated number of shots, the stage 3 or the converging optical system 5 is driven to relatively move the laser pulse and the article to be processed 6. As a result, the laser beam can be applied to a plurality of positions of one article to be processed 6. Thus, by synchronizing the relative position movement of the laser pulse irradiation positions by the stage 3 or the converging optical system 5 with the beam output, and by controlling the number of shots and a beam scanning speed, it is possible to realize highly accurate pattern processing without any cracks.

FIG. 2 shows an example of a microscopic picture when a surface of the BK 7 is actually subjected to abrasion for each of the basic parameters. Laser processing positions corresponding to conditions are shown in a matrix in the drawing. A case is shown in which for the numbers of shots 1, 10, 25, 50, 100, 1000 and 3000 sequentially from left to right, fluences are 2.5, 1.875, 1.25, and 0.625 J/cm² sequentially from down to up.

As shown in FIG. 2, in the case of a fluence equal to or more than a single-shot processing threshold fluence, abrasion is recognized from one shot, and an increase in number of shots is accompanied by enlargement of a processing diameter. On the other hand, in the case of a fluence equal to/less than the single-shot processing threshold fluence, processing is not executed at one shot, while processing is recognized at 50 shots or more for 1.25 J/cm² and at 3000 shots or more for 0.625 J/cm². It can accordingly be understood that in the case of laser irradiation by the fluence equal to/less than the single-shot processing threshold fluence, there is a threshold value of the number of shots for processing the article 6 to be processed, i.e., the threshold number of the shots.

A possible occurrence principle for conventional abrasion which applies energy equal to or more than a single-shot processing threshold fluence by an ultrashort pulse laser is as follows.

Energy of high strength is absorbed by an ion tunneling and multiphoton absorbing process, and bound electrons are directly ionized. Further, the electrons absorb the energy, thereby causing an energy movement to photons, an article to be processed that is a target is heated, and the electrons are passed through a melting temperature within a very short interaction period to evaporate. In the case of this single-shot laser processing, the ion tunneling is dominant.

On the other hand, a possible occurrence principle for the abrasion of the invention is as follows.

When a laser pulse of a fluence equal to or more than the single-shot processing threshold fluence is applied as many as a plurality of shots, energy is absorbed by the article to be processed 6 by an absorption process of multiphotons (about 2 to 4 photons) more than those in the case of a single shot. Then, by the number of shots, direct ionizing occurs in stages. Heating of electrons, ions and an energy movement to photons are repeated to activate and modify a material. Further, modification by repeated energy application causes a substantial reduction in processing threshold fluence of the material. Such a substantial processing threshold fluence is recognized in the case of irradiation as many as a plurality of shots, and it will be referred to as a multishot processing threshold fluence hereinafter. In other words, at the multishot processing threshold fluence or more, abrasion can occur by energy application of a fluence equal to/less than the single-shot processing threshold fluence. Even at a fluence equal to/less than the single-shot processing threshold fluence, as in the case of the single-shot processing threshold fluence or more, a spot diameter is increased by an increase in number of shots. Thus, by controlling the number of shots, a fine adjustment of a processing area is enabled more than that in the case of changing a beam output or the like. As a result, it is possible to realize highly accurate processing.

For example, by setting the numbers of shots to various values and obtaining presence of laser processing for each number of shots, the threshold number of the shots can be experimentally obtained. Then, in the case of processing an article made of the same material, by laser pulse irradiation at the number of shots equal to or more than the threshold number of the shots, laser processing can be carried out.

As described above, according to the embodiment, even at the fluence equal to/less than the single-shot processing threshold fluence, by applying a plurality of shots of a laser pulse, laser processing can be carried out for the article to be processed. Accordingly, even a material of a high single-shot processing threshold fluence can be processed at a low fluence. For example, even a material on which a thermal influence is large to easily cause energy destruction can be processed at a sufficiently low fluence. Additionally, control of the number of shots by using the Pockels cell is easier than control of a pulse width or a fluence. Thus, a processing algorithm can be simplified, thereby enhancing reproducibility. As a result, it is easy to control clean and highly accurate processing for various materials with only a limited influence of cracks or the like.

### (Second Embodiment)

The embodiment is a modified example of the first embodiment. The embodiment is characterized in that a pulse width and the threshold number of shots are calculated by analysis based on a multiphoton absorption process and laser processing is carried out based on the obtained threshold number of shots. A device configuration for realizing the embodiment is similar to that of the first embodiment shown in FIG. 1.

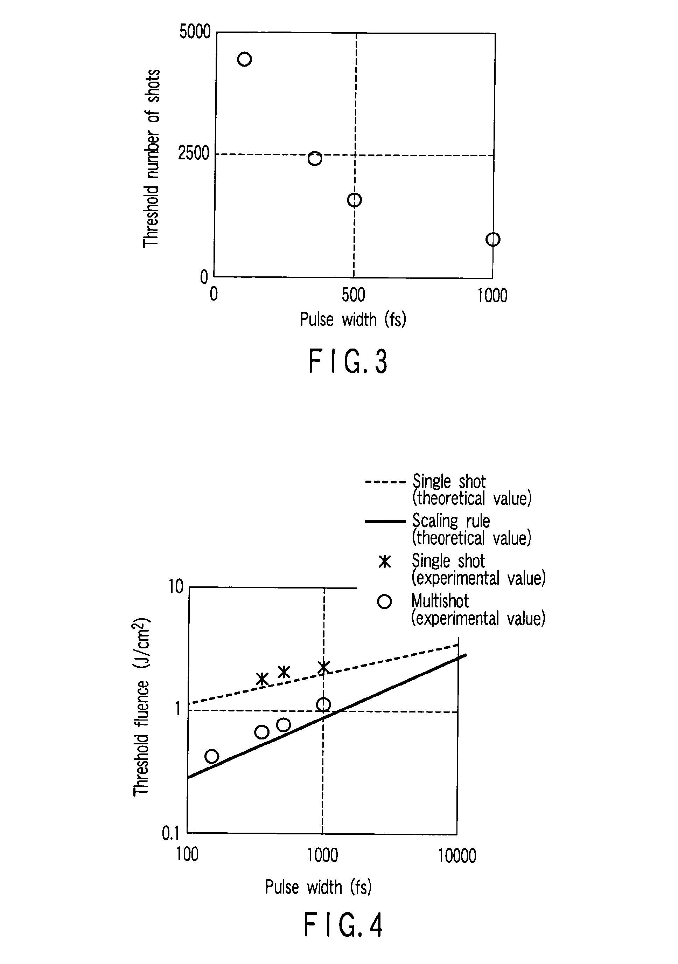

First, in abrasion processing of a BK 7, by using a computer 4 or another computer, processing in an ultrashort pulse area compliant with a scaling rule is assumed to be a 2-photon absorption process, and a relationship between a pulse width and the threshold number of the shots is calculated by analysis. FIG. 3 shows the calculated relationship between the pulse width and the threshold number of the shots.

Then, the obtained threshold number of shots is set as the number of shots, and laser irradiation is performed at various fluences by using an ultrashort pulse laser processing device 10 as in the case of the first embodiment.

In this laser irradiation, a converging point of a converging optical system 5 is set on a glass surface of the BK 7 which is an article to be processed 6. As a result of the laser irradiation, an experimental value of a multishot processing threshold fluence is obtained by observing presence of laser processing of the article 6 to be processed. FIG. 4 shows the obtained experimental value of the multishot processing threshold fluence together with a theoretical value. In addition to the multishot processing threshold fluence, FIG. 4 shows experimental and theoretical values of a single-shot processing threshold fluence. A scaling rule between a pulse width and a multishot processing threshold fluence at the time of irradiation of a plurality of shots is represented by Fₜₕ = α·τ^{1/2}, and a relationship between a pulse width and a single-shot processing threshold fluence at the time of irradiation of one shot is represented by Fₜₕ = β·τ^{1/4}. The threshold number of the shots in the case of the scaling rule at the time of irradiation of the plurality of shots is calculated by assuming the time of 2-photon absorption.

As shown in FIG. 3, as a pulse width is larger, the threshold number of the shots is smaller. As apparent from the scaling rule at the time of irradiation of the plurality of shots, i.e., comparison of the theoretical and experimental values with each other, it can be confirmed that processing compliant with the scaling rule obtained by the theoretical value can be substantially carried out, and processing at a threshold fluence equal to/less than the single-shot threshold fluence at the time of irradiation of a single shot can be carried out.

That is, it can be confirmed that processing at the time of the number of shots analyzed by a 2-photon absorption model is processing using a phenomenon of the scaling rule. Thus, it can be understood that processing is preferably executed near the scaling rule in the case of highly accurate and shape-adjusted processing. By calculating the threshold number of the shots based on the theoretical value, it is possible to perform laser processing stably with high reproducibility.

As described above, according to the embodiment, the pulse width and the threshold number of the shots complaint with the scaling rule are calculated by the analysis based on the multiphoton absorption model, and the laser processing is carried out by setting this threshold number of shots as the number of shots. Here, even in a pulse width of a femtosecond area, a relationship with the multishot processing threshold fluence complies with the scaling rule, a phenomenon of a tunnel effect or the like caused by high-strength energy observed in a conventional so-called single-shot method is reduced, and the multiphoton absorption process is used as a dominant phenomenon. Thus, the laser processing can be carried out stably with high reproducibility. By using the processing compliant with the scaling rule, it is possible to set processing conditions and algorithms which facilitate stable control of various materials. Moreover, since the threshold number of the shots is obtained by simulation, it is not necessary to experiment with laser processing of the same material to obtain the threshold number of the shots. As a result, it is possible to realize highly efficient laser processing.

### (Third Embodiment)

The embodiment is a modified example of the first embodiment. While the first embodiment shows the example of executing abrasion as laser processing, this embodiment is characterized by setting a laser focus in an article to 6 to be processed and modifying the inside thereof. A device configuration for realizing the embodiment is similar to that of the first embodiment shown in FIG. 1.

According to the embodiment, a BK 7 is used as the article to be processed 6. Arrangements other than setting of a converging point of a converging optical system 5 in a glass of the article to be processed 6 are similar to those of the first embodiment. That is, a laser pulse from an ultrashort pulse laser generator 1 is converged in the article to be processed 6 by using the converging optical system 5. Accordingly, the inside of the article to be processed 6 is modified. A refraction index is changed in the modified area. By observing the change in refractive index, presence of laser processing can be determined.

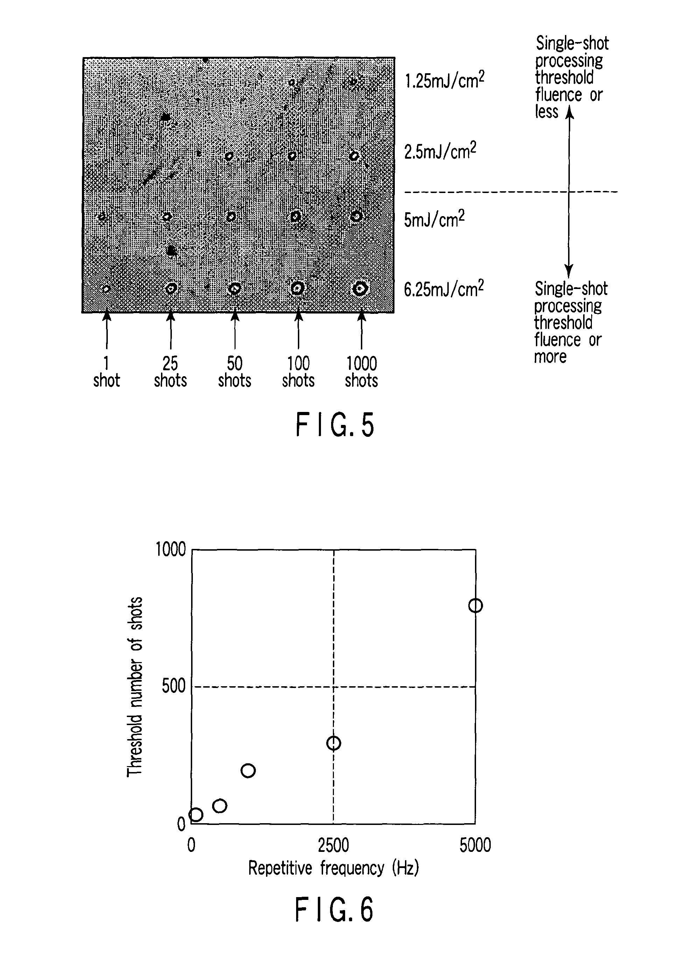

Totally 20 are set, i.e., 4 fluences of 6.25, 5, 2.5, and 1.25 mJ/cm² and 5 numbers of shots of 1, 25, 50, 100 and 1000. A pulse width is 500 fs. FIG. 5 shows an example of a microscopic picture of the BK 7 obtained by laser irradiation. Laser processing positions corresponding to conditions are shown in a matrix in the drawing. A case is shown in which the numbers of shots are set to 1, 25, 50, 100 and 1000 sequentially from left to right, and fluences are set to 6.25, 5, 2.5, and 1.25 mJ/cm² respectively from down to up.

As shown in FIG. 5, in the case of a fluence equal to or more than a single-shot processing threshold fluence, internal modification is recognized from one shot, and an increase in number of shots is accompanied by an increase of modified areas. On the other hand, in the case of a fluence equal to/less than the single-shot processing threshold fluence, processing is not executed at one shot, while processing is recognized at 50 shots or more for 2.5 mJ/cm² and at 100 shots or more for 1.25 mJ/cm². It is accordingly apparent that in the case of laser irradiation at the fluence equal to/less than the single-shot processing threshold fluence, there is a threshold value of the number of shots causing internal modification of the article to be processed 6, i.e., the threshold number of the shots.

Even when a change occurs in internal refraction index, by applying a laser pulse of low energy and internal electron charging, a processing threshold fluence that the article to be processed 6 has can be reduced. It is accordingly apparent that laser processing can be carried out even at a fluence equal to/less than the single-shot processing threshold fluence. In other words, by repeating irradiation to activate a material and a subsequent reduction in processing threshold fluence, and by applying a plurality of laser pulses, laser processing can be carried out even at a fluence at which processing has been impossible at a single shot. Further, in energy application of high strength exceeding the single-shot processing threshold fluence, execution of a pure multiphoton absorption process is difficult because of an influence of a laser electric field. In this case, an influence of cracks or the like is strong in the article to be processed. On the other hand, according to the embodiment, by using a multishot laser irradiation technology, a multiphoton absorption process finer than that in the case of a single shot can be realized, whereby finer and cleaner processing is enabled.

Thus, according to the embodiment, not only in the case of abrasion but also in the case of internal modification, by laser pulse irradiation as many as a plurality of shots, it is possible to perform laser processing at a fluence equal to/less than the single-shot processing threshold fluence.

### (Fourth Embodiment)

The embodiment is a modified example of the first embodiment. The embodiment is characterized in that the threshold number of shots for laser processing is controlled by controlling a repetitive frequency of a laser pulse, i.e., an interval of the numbers of shots. A device configuration for realizing the embodiment is similar to that of the first embodiment shown in FIG. 1.

According to the embodiment, an electric shutter is used as a shutter 2. The interval of the numbers of shots is controlled by using a computer 4 and synchronizing an opening interval of the electric shutter with a repetitive frequency of a laser beam source. A BK 7 is used as an article to be processed, and surface abrasion is carried out.

Specifically, a repetitive frequency of an ultrashort pulse laser generator 1 is 5 kHz, and a repetitive frequency of 5 kHz or less is optionally set by controlling the opening interval of the shutter. For example, when a frequency of opening timing of the electric shutter is 2.5 kHz, a frequency of a laser pulse passed through the shutter 2 becomes 2.5 kHz. When a frequency of opening timing of the electric shutter is 1 kHz, a frequency of a laser pulse passed through the shutter 2 can be set to 1 kHz. Accordingly, by setting repetitive frequencies of a laser pulse applied to the article to be processed 6 to 5000 Hz, 2500 Hz, 1000 Hz, 500 Hz and 100 Hz, and observing presence of abrasion of the article to be processed 6, a relationship between a repetitive frequency and the threshold number of the shots is obtained. FIG. 6 shows the obtained relationship.

As shown in FIG. 6, as a repetitive frequency is smaller, the threshold number of the shots to be given is larger. In other words, the number of shots can be optionally set by controlling the repetitive frequency. When optional shot number control is difficult because of performance of a stage 5 in surface or internal pattern processing of the article to be processed 6, by controlling the repetitive frequency, fine processing of no cracks near a threshold value is enabled.

Thus, according to the embodiment, by controlling the repetitive frequency, the number of shots can be easily controlled. In other words, a shot interval can be controlled by the shutter 2. A shot interval is set short in the case of a material of a high multishot processing threshold fluence, and a shot interval is set long in the case of a material of a large thermal influence, or the like, whereby the number of shots can be controlled. Since control of the number of shots by using the electric shutter is easier than control of a pulse width and a fluence, processing can be carried out while a fluence and a pulse width are fixed. Thus, a processing algorithm can be simplified, reproducibility can be enhanced, and clean and highly accurate processing of only a limited influence of cracks or the like can be controlled for various materials.

The present invention is not limited to the foregoing embodiments.

The parameters such as the laser pulse width, the fluence, the number of shots and the laser wavelength used in the embodiments are only examples, and can properly be changed without departing from a main gist of the invention.

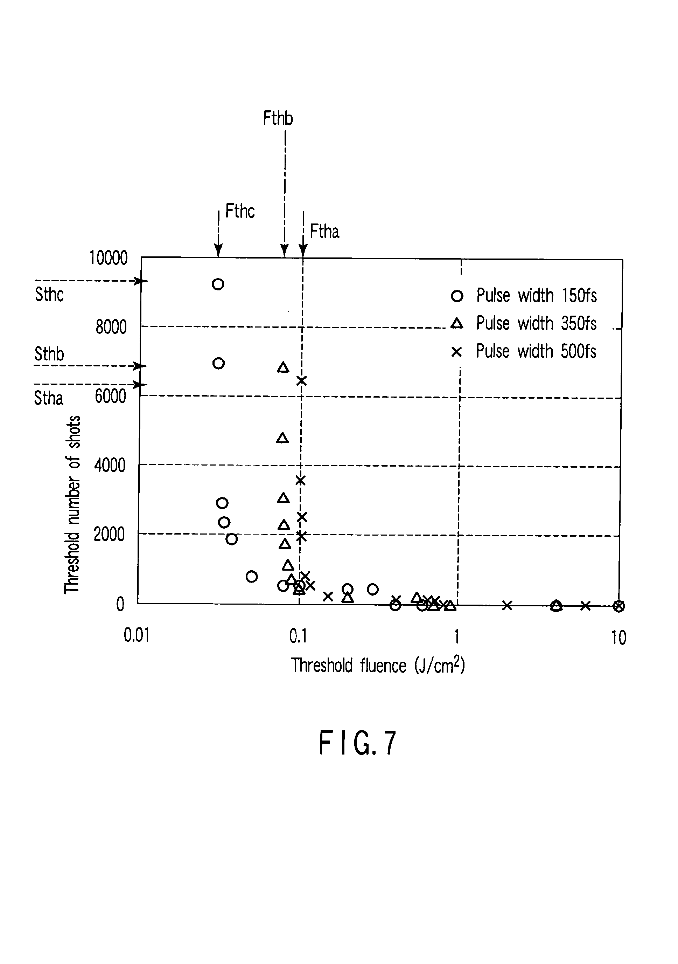

For example, the number of shots is preferably selected within a range of about 2 to 10000 shots. FIG. 7 shows a relationship between a multishot processing threshold fluence and the threshold number of the shots when a glass is subjected to abrasion by a method similar to the laser processing method of the first embodiment, and three kinds of pulse widths, 150 fs, 350 fs and 500 fs, are shown. According to the method of the embodiment for processing at the fluence equal to/less than the single-shot processing threshold fluence, a fluence which enables processing is decided by each pulse width. For example, at 500 fs, a fluence is in a range of about 1 J/cm² to 0.1 J/cm² which is a single-shot processing threshold fluence. A lower limit of fluences, i.e., a multishot processing threshold fluence, is decided by laser induced destruction, i.e., a kind of laser processing, a material of an article to be processed, or a laser wavelength. Multishot processing threshold fluences of pulse widths are Fₜₕₐ = 0.1 J/cm² at 500 fs, F_{thb} = 0.05 J/cm² at 350 fs, and F_{thc} = 0.02 J/cm² at 150 fs. Near the multishot processing threshold fluence, a change gradient in threshold number of shots is large as shown. In consequence, stable processing control is difficult unless the number of shots is controlled with respect to a fluctuation in fluence. In the case of processing by a pulse width of 150 fs, there is resistance to an influence of a fluence fluctuation up to an upper limit S_{thc} of the number of shots which is about 9000 shots. There is resistance to an influence of a fluence fluctuation up to an upper limit S_{thb} of the number of shots which is about 7000 shots in the case of 350 fs and up to an upper limit Sₜₕₐ of the number of shots which is about 6000 shots in the case of 50s fs. Thus, the upper limit of the number of shots for stable processing varies depending on a pulse width and a material. To perform more stable processing, an upper limit is preferably set to about 2 to 10000 shots. A more preferable range is about 2 to 4000 shots.

A repetitive frequency of a laser beam applied to the article to be processed 6 is preferably selected within a range of 1 Hz to 100 MHz. A laser pulse width is preferably set equal to/less than 10 ps at which a photon density capable of multiphoton absorption at a level enabling nonthermal processing of a pulse width is obtained. Thus, by using an ultrashort pulse of 10 ps or less in which a light is compressed timewise, a material can be sufficiently ionized directly even in an area of the single-shot processing threshold fluence or less. Accordingly, by repeatedly applying a pulse laser beam, the material can be ionized in stages. Further, since a thermal influence can be suppressed at an ultrashort pulse beam, cleaner and finer processing can be carried out. A wavelength can be obtained when a commercially available femtosecond laser 800 nm is converted into a wavelength, and is preferably set to about 100 nm to 100 µm which is a wavelength area likely to be used for processing. Thus, by employing the multishot method of changing the wavelength of the laser beam and controlling the number of shots, highly accurate processing of a size equal to/less than a diffraction limit normally imposed by a laser wavelength is enabled, whereby processing resolution can be enhanced. A fluence is decided by a pulse width, a material of an article to be processed, a kind of laser processing, a laser wavelength or the like, and preferably set to about 0.1 µJ/cm² to 100 J/cm². Especially, when a resin is internally modified by a 500 femtosecond pulse, a preferred range is about 10 µJ/cm² to 1000 µJ/cm², and a range of about 0.1 J/cm² to 10 J/cm² is preferable in the case of glass abrasion.

The laser processing is not limited to the abrasion and the internal modification of the embodiments, but all kinds of processing technologies of cutting, breaking, surface modifying, refraction index changing, material structure and physical property changing, and the like can be targeted. In addition, the invention can be applied to a pattern processing technology which causes a pulse laser to interfere and transfers an interference fringe to the article to be processed. In this case, by using an optical system utilizing Michelson interference method or the like, laser interference may be generated between the shutter 2 and the article to be processed 6. Thus, by using the beam interference, it is possible to transfer an interference pattern to the article to be processed finely and highly accurately. Moreover, for the article to be processed 6, not only a glass but also all kinds of materials such as a metal, a crystal, a resin and a biomaterial can be targets. Depending on the processing technologies and the kinds of materials, a preferable range of the parameters can be properly changed.

The embodiments of the present invention have been described. However, the embodiments are in no way limitative of the invention, and needless to say, the invention can be implemented by various modes without departing from a gist of the invention.

### Industrial Applicability

As described above, the present invention is applicable to a technical field of an ultrashort pulse laser processing method for finely processing an article to be processed by using an ultrashort pulse laser.

## Claims

1. An ultrashort pulse laser processing method for processing an article to be processed by using an ultrashort pulse laser, which comprises:
setting a laser pulse to a fluence not more than a single-shot processing threshold fluence which is a fluence processing threshold value at the time of one pulse irradiation; and
applying a plurality of shots of the laser pulse to the article to be processed.

2. The ultrashort pulse laser processing method according to claim 1, wherein the number of the shots of the pulse laser is 2 to 10000, and a repetitive frequency is 1 Hz to 100 MHz.

3. The ultrashort pulse laser processing method according to claim 1, wherein a pulse width of the pulse laser is 10 ps or less, and a laser wavelength is 100 nanometers or more to 100 micrometers.

4. The ultrashort pulse laser processing method according to claim 1, wherein the fluence is 0.1 microjoules/cm² or more to 100 joules/cm² or less.

5. The ultrashort pulse laser processing method according to claim 1, wherein the threshold number of the shots is set by analysis which uses a multiphoton absorption model based on a pulse width and a multishot processing threshold fluence which is a fluence processing threshold value at the time of irradiation of a plurality of pulses, and the number of the shots of the pulse laser is set equal to or more than the threshold number of the shots.

6. The ultrashort pulse laser processing method according to claim 1, wherein the fluence of the pulse laser is set to a multishot processing threshold fluence when a relationship between a pulse width and the multishot processing threshold fluence which is a fluence processing threshold value at the time of irradiation of a plurality of pulses complies substantially with a scaling rule.

7. The ultrashort pulse laser processing method according to claim 1 or 5, wherein the number of the shots is controlled to control a processing spot of the article to be processed.

8. The ultrashort pulse laser processing method according to claim 1 or 5, wherein the pulse laser which is applied to the article to be processed is formed into a desired beam shape by a converging optical system, and the pulse laser and the article to be processed are moved relatively to each other.

9. The ultrashort pulse laser processing method according to claim 1 or 5, wherein the application of the pulse laser to the article to be processed is carried out by causing the pulse laser to interfere and transferring an interference fringe to the article to be processed.

10. The ultrashort pulse laser processing method according to claim 1 or 5, wherein the article to be processed is at least one selected from a metal, a crystal, a glass, a resin and a biomaterial, and the threshold number of the shots is changed in accordance with a kind of the article to be processed.

## Amended claims

### Amended claims under Art. 19.1 PCT

1. (Amended) An ultrashort pulse laser processing method for processing an article to be processed by using an ultrashort pulse laser, which comprises:
setting a pulse of a laser to a fluence not more than a single-shot processing threshold fluence which is a fluence processing threshold value at the time of one pulse irradiation, and setting the pulse to a pulse width of 10 ps or less and a laser wavelength of 100 nanometers or more to 100 micrometers or less; and
applying a plurality of shots of the pulse to the article to be processed.

2. (Amended) The ultrashort pulse laser processing method according to claim 1, wherein the number of the shots of the pulse is 2 to 10000, and a repetitive frequency is 1 Hz to 100 MHz.

3. (Deleted)

4. The ultrashort pulse laser processing method according to claim 1, wherein the fluence is 0.1 microjoules/cm² or more to 100 joules/cm² or less.

5. (Amended) The ultrashort pulse laser processing method according to claim 1, wherein the threshold number of the shots is set by analysis which uses a multiphoton absorption model based on a pulse width and a multishot processing threshold fluence which is a fluence processing threshold value at the time of irradiation of a plurality of pulses, and the number of the shots of the pulse is set more than the threshold number of the shots.

6. (Amended) The ultrashort pulse laser processing method according to claim 1, wherein the fluence of the pulse is set to a multishot processing threshold fluence when a relationship between a pulse width and the multishot processing threshold fluence which is a fluence processing threshold value at the time of irradiation of a plurality of pulses complies substantially with a scaling rule.

7. The ultrashort pulse laser processing method according to claim 1 or 5, wherein the number of the shots is controlled to control a processing spot of the article to be processed.

8. The ultrashort pulse laser processing method according to claim 1 or 5, wherein the pulse laser which is applied to the article to be processed is formed into a desired beam shape by a converging optical system, and the pulse laser and the article to be processed are moved relatively to each other.

9. The ultrashort pulse laser processing method according to claim 1 or 5, wherein the application of the pulse laser to the article to be processed is carried out by causing the pulse laser to interfere and transferring an interference fringe to the article to be processed.

10. The ultrashort pulse laser processing method according to claim 1 or 5, wherein the article to be processed is at least one selected from a metal, a crystal, a glass, a resin and a biomaterial, and the threshold number of the shots is changed in accordance with a kind of the article to be processed.
